# EUROPÄISCHE PATENTANMELDUNG

(11) **EP 0 751 185 A2**
(43) Veröffentlichungstag der Anmeldung: **02.01.1997**
(21) Anmeldenummer: 96109765.6
(22) Anmeldetag: 18.06.1996
(51) Int. Cl.: C08L 71/12, C09J 171/02, C08L 25/04, C08K 5/16

(54) **Thermoplastische Polyphenyletherformmassen mit verbesserter Haftung an Polyurethanschaum**

(30) Priorität: 27.06.1995 DE 19523341
(71) Anmelder: BASF Aktiengesellschaft, 67063 Ludwigshafen (DE)
(72) Erfinder: Weiss, Robert, Dr., 67281 Kirchheim (DE); Holderbaum, Martin, Dr., 67065 Ludwigshafen (DE); Goetze, Wolfgang, 67133 Maxdorf (DE)
(74) Vertreter: Geissler, Bernhard, Dr.jur., Dipl.-Phys.

(57) **Zusammenfassung**

Thermoplastische Formmassen, enthaltend
A) 5-99,99 Gew.-% eines Polyphenylenethers,
B) 0 bis 94,99 Gew.-% vinylaromatische Polymere, insbesondere schlagzäh modifizierte Styrolpolymerisate,
C) 0,01-10 Gew.-% Aminomethylencyanessigester, und
D) 0-95 Gew.- % Zusatzstoffe,
wobei sich die Gew.-%-Angaben auf die Summe der Bestandteile A, B, C und D als 100 Gew.-% beziehen.

## Beschreibung

Die Erfindung betrifft thermoplastische Formmassen auf der Grundlage von Polyphenylenethern (PPE). Weiterhin betrifft die Erfindung die Verwendung derartiger Formmassen zur Herstellung von Formkörpern und die aus den erfindungsgemäßen Formmassen erhältlichen Formkörpern. Des weiteren bezieht sich die Erfindung auf Zusatzmittel zu PPE-Formmassen.

Polymermischungen aus Polyphenylenether und Styrolpolymerisaten sind aus US 3 383 435, US 4 128 602 und US 4 128 603 bekannt. Solche Formmassen eignen sich zur Herstellung von Formteilen, die sich im Vergleich zu schlagzäh modifizierten Styrolpolymerisaten, die nicht mit Polyphenylenether abgemischt sind, durch eine bessere Wärmeformbeständigkeit auszeichnen. Die Materialeigenschaften derartiger Formteile sind im allgemeinen zufriedenstellend, doch hat es sich gezeigt, daß einige Eigenschaften, insbesondere bei Pigmentierung der Materialien, weiter verbessert werden sollten.

Für Anwendungen im Automobilsektor, z.B. von Armaturentafelträgern, ist es erforderlich, daß die thermoplastischen Formmassen außerdem eine ausreichende Haftung zu Polyurethanschaum zeigen, da diese Formteile mit PU-Schaum hinterschäumt werden.

Zur Verbesserung der Haftung zu PU-Schaum an PPE wird in DE-A 42 09 033 der Einsatz von niedermolekularem PPE in Kombination mit kautschukreichem HIPS (high impact polystyrene: hochschlagfestes Polystyrol) vorgeschlagen.

Ein Ziel der vorliegenden Erfindung ist es, PPE enthaltende Formmassen zu schaffen, die sowohl gute Haftung zu PU, insbesondere PU-Schäumen, als auch gute Kerbschlagzähigkeit besitzen.

Der vorliegenden Erfindung lag insbesondere die weitere Aufgabe zugrunde, thermoplastische PPE-Formmassen zu Verfügung zu stellen, die, auch bei Pigmentierung, eine gute Haftung zu PU-Schäumen und gleichzeitig ein gutes mechanisches Eigenschaftsprofil bei verbesserter Lichtbeständigkeit aufweisen.

Diese Aufgaben werden durch die in Anspruch 1 definierten Formmassen gelöst. Bevorzugte Massen dieser Art und andere vorteilhafte Weiterbildungen der Erfindung sind in den Unteransprüchen aufgeführt.

Die erfindungsgemäßen Formmassen enthalten
A) 5-99,99 Gew.- % eines Polyphenylenethers,
B) 0 bis 94,99 Gew.- % vinylaromatische Polymere, insbesondere schlagzäh modifizierte Styrolpolymerisate,
C) 0,01-10 Gew.- % Aminomethylencyanessigester, und
D) 0-95 Gew.- % Zusatzstoffe,
wobei sich die Gew.- %-Angaben auf die Summe der Bestandteile A, B, C und D als 100 Gew.-% beziehen.

Die in den erfindungsgemäßen Formmassen enthaltenen Polyphenylenether A sind an sich bekannt. Die Polyphenylenether A sind in den erfindungsgemäßen Formmassen in einer Menge von 5 bis 99,99, bevorzugt 15 bis 85 und insbesondere 30 bis 70 Gew.- % enthalten.

Es handelt sich um lineare oder verzweigte Verbindungen auf Basis von substituierten, insbesondere disubstituierten Polyphenylenethern, wobei der Ethersauerstoff der einen Einheit an den aromatischen Ring, insbesondere den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome wie Chlor oder Brom und Alkylreste mit 1 bis 4 Kohlenstoffatomen, die vorzugsweise kein α-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein.

Weitere Beispiele möglicher Substituenten am Phenylenring des PPE sind Alkoxyreste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Beispiele für Polyphenylenether sind Poly(2,6-dilauryl-1,4-phenylenether), Poly(2,6-diphenyl-1,4-phenylenether), Poly(2,6-dimethoxy-1,4-phenylenether). Poly(2,6-diethoxy-1,4-phenylenether), Poly(2-methoxy-6-ethoxy-1,4-phenylenether), Poly(2-ethyl-6-stearyloxy-1,4-phenylenether), Poly-(2,6-dichlor-1,4-phenylenether), Poly(2-methyl-6-phenyl-1,4-phenylenether), Poly(2,6-dibenzyl-1,4-phenylenether), Poly(2-ethoxy-1,4-phenylenether), Poly(2-chlor-1,4-phenylenether), Poly(2,5-dibrom-1,4-phenylenether). Bevorzugt werden Polyphenylenether eingesetzt, bei denen die Substituenten Alkylreste mit 1 bis 4 Kohlenstoffatomen sind, wie Poly(2,6-dimethyl-1,4-phenylenether), Poly(2,6-diethyl-1,4-phenylenether),Poly-(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Unter Polyphenylenethern im Sinne der Erfindung sollen auch solche verstanden werden, die mit Monomeren wie Fumarsäure, Maleinsäure oder Maleinsäureanhydrid modifiziert sind. Derartige Polyphenylenether sind u.a. in der WO87/00540 beschrieben.

Hinsichtlich der physikalischen Eigenschaften des Polyphenylenether werden solche in den erfindungsgemäßen Formmassen eingesetzt, die ein mittleres Molekulargewicht M_{w} (Gewichtsmittel) von 8000 bis 70000, bevorzugt 12000 bis 50000 und insbesondere 25000 bis 45000, aufweisen. Dies entspricht einer Grenzviskosität von 0,18 bis 0,7, bevorzugt von 0,25 bis 0,53 und insbesondere von 0,39 bis 0,50 dl/g, gemessen in Chloroform bei 25°C.

Die Bestimmung der Molekulargewichtsverteilung erfolgt im allgemeinen mittels Gelpermeationschromatographie (Shodex®-Trennsäulen 0,8 x 50 cm des Typs A 803, A 804 und A 805 mit THF als Elutionsmittel bei Raumtemperatur). Die Lösung der PPE-Proben in THF erfolgt unter Druck bei 110°C, wobei 0,16 ml einer 0,25-gew.-%igen Lösung injiziert werden. Die Detektion erfolgt im allgemeinen mit einem UV-Detektor. Die Eichung der Säulen wurde mit PPE-Proben durchgeführt, deren absolute Molekulargewichtsverteilungen durch eine GPC-Laser-Lichtstreuungskombination bestimmt wurde.

Die Komponente B ist in den erfindungsgemäßen Formmassen optional in Mengen von beispielsweise 0 bis 94,99, bevorzugt 15 bis 85 und insbesondere 30 bis 70 Gew.- % enthalten, bezogen auf das Gesamtgewicht der Komponenten A bis D. Die Komponente B ist bevorzugt ein schlagzäh modifiziertes vinylaromatisches Polymer, das vorzugsweise mit dem eingesetzten Polyphenylenether verträglich ist. Beispiele für bevorzugte, mit Polyphenylenethern verträgliche vinylaromatische Polymere sind der Monographie von O. Olabisi, Polymer-Polymer Miscibility, 1979, S. 224 bis 230 und 245 zu entnehmen.

Es kommen sowohl Homo- als auch Copolymerisate von vinylaromatischen Monomeren mit 8 bis 12 C-Atomen in Betracht, welche in Gegenwart eines Kautschuks hergestellt werden. Der Kautschukgehalt beträgt 5 bis 25 Gew.-%, vorzugsweise 8 bis 17 Gew.-%. Geeignete schlagfest modifizierte Polystyrole sind im Handel erhältlich und weisen eine Viskositätszahl (VZ) der Hartmatrix von 50 bis 130 ml/g (0,5 %ig in Toluol bei 23 °C) auf, vorzugsweise von 60 bis 90 ml/g.

Als vinylaromatische Monomere kommen dabei insbesondere Styrol in Betracht, ferner die kern- oder seitenkettenalkylierten Styrole. Als Beispiele seien Chlorstyrol, α-Methylstyrol, Styrol, p-Methylstyrol, Vinyltoluol und p-tert.-Butylstyrol genannt. Vorzugsweise wird jedoch Styrol allein verwendet.

Die Homopolymerisate werden im allgemeinen nach den bekannten Verfahren in Masse, Lösung oder Suspension hergestellt (vgl. Ullmanns Encyklopädie der technischen Chemie, Band 19, Seiten 265 bis 272, Verlag Chemie, Weinheim 1980). Die Homopolymerisate können Gewichtsmittel des Molekulargewichts M_{w} von 3000 bis 300 000 aufweisen, die nach üblichen Methoden bestimmt werden können.

Als Comonomere zur Herstellung von Copolymerisaten (Komponente B) kommen z.B. (Meth)acrylsäure, (Meth)acrylsäurealkylester mit 1 bis 4 C-Atomen im Alkylrest, Acrylnitril und Maleinsäureanhydrid sowie Maleinsäureimide, Acrylamid und Methacrylamide sowie deren N,N oder N-alkylsubstituierten Derivate mit 1-10 C-Atomen im Alkylrest in Frage.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in der US-P 43 60 618, 44 05 753 und in der Veröffentlichung von J.R. Fried, G.A. Hanna, Polymer Eng. Scie. Band 22 (1982) Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980) beschrieben sind. Die Copolymerisate haben im allgemeinen ein Gewichtsmittel des Molekulargewichtes (M_{w}) von 10 000 bis 300 000.

Bei der Komponente B handelt es sich vorzugsweise um schlagzäh modifiziertes Polystyrol, besonders bevorzugt um Styrol-Butadien-Pfropfpolymere.

Die meist angewandten Verfahren zur Herstellung schlagzäh modifizierter Styrolpolymerisate sind die Polymerisation in Masse oder Lösung in Gegenwart eines Kautschuks, wie es beispielsweise in der US-Patentschrift 26 94 692 beschrieben ist, und Verfahren zur Massesuspensionspolymerisation, wie sie beispielsweise in der US-Patentschrift 28 62 906 beschrieben sind. Selbstverständlich sind auch andere Verfahren anwendbar, sofern die gewünschte Teilchengröße der Kautschukphase eingestellt wird. Als Kautschuke werden die üblicherweise für die Schlagzähmodifizierung von Styrolpolymerisaten gebräuchlichen natürlichen oder synthetischen Kautschuke eingesetzt. Geeignete Kautschuke im Sinne der Erfindung sind neben Naturkautschuk z. B. Polybutadien, Polyisopren und Mischpolymerisate des Butadiens und/oder Isoprens mit Styrol und anderen Comonomeren, die eine Glastemperatur, bestimmt nach K.H. Illers und H. Breuer, Kolloidzeitschrift 190 (1),16-34 (1963), unter -20°C besitzen.

Die erfindungsgemäße Komponente C ist vorzugsweise als chemische Verbindung aus DB 41 22 475 bekannt. Es handelt sich dabei um Aminomethylencyanessigester der allgemeinen Formel 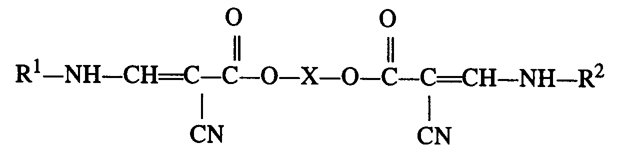 bei der
R¹ und R² unabhängig voneinander Phenyl, Naphthyl, Biphenyl oder fünf- oder sechsgliedriges Heteroaryl mit einem, zwei oder drei Stickstoffatomen oder einem Sauerstoffatom oder einem Schwefelatom oder einem Stickstoff- und einem Sauerstoffatom oder einem Stickstoff- und einem Schwefelatom, das benzanelliert sein kann, bedeuten, wobei diese Reste durch ein bis drei C₁- bis C₁₂-Alkylgruppen, C₁- bis C₁₂-Alkoxygruppen, Halogenatome, Cyanogruppen, Hydroxylgruppen, oder Gruppen der Formeln COOR³, COR³, CONHR³, OCOR³ oder NHCOR³ substituiert sein können und wobei R³ für C₁- bis C₁₂-Alkyl, C₅- bis C₈-Cycloalkyl oder Phenyl steht, und X eine C₂-bis C₃₀-Alkylengruppe, welche durch nicht benachbarte Sauerstoffatome unterbrochen sein kann, eine C₄- bis C₁₂-Alkenylen- oder C₄- bis C₁₂-Alkinylengruppe, wobei die ungesättigten Bindungen nicht zu den Ester-Sauerstoffatomen benachbart sind, eine C₅- bis C₈-Cycloalkylengruppe oder eine Phenylengruppe bezeichnet.

Als Heteroarylreste R¹ bzw. R² kommen beispielsweise in Betracht: Pyrrol, Pyrazol, Imidazol, 1,2,3-Triazol, 1,2,4-Triazol, Pyridin, Pyridazin, Pyrimidin, Pyrazin, 1,2,3-Triazin, 1,2,4-Triazin, 1,3,5-Triazin, Furan, Thiophen, Oxazol, Isoxazol, Thiazol, Indol, Benzofuran, Benzothiophen, Benzimidazol, Chinolin, Isochinolin, Cinnolin, Chinazolin, Chinoxalin oder Phthalazin.

Als Substituenten an den Aryl- oder Heteroarylresten R¹ bzw. R² eignen sich:
- geradkettige oder verzweigte C₁- bis C₁₂-Alkylgruppen wie vor allem Methyl, Ethyl, n-Propyl, iso-Propyl, n-Butyl, iso-Butyl, sec.-Butyl und tert.-Butyl, daneben aber auch n-Pentyl, tert.-Pentyl, n-Hexyl, n-Heptyl, n-Octyl, 2-Ethylhexyl, n-Nonyl, iso-Nonyl, n-Decyl, iso-Decyl, n-Undecyl oder n-Dodecyl;
- geradkettige oder verzweigte C₁- bis C₁₂-Alkoxygruppen wie vor allem Methoxy, Ethoxy, n-Propoxy, iso-Propoxy, n-Butoxy, iso-Butoxy, sec.-Butoxy, n-Pentoxy und tert.-Pentoxy, daneben aber auch n-Hexoxy, n-Heptoxy, n-Octoxy, 2-Ethylhexoxy, n-Nonoxy, iso-Nonoxy, n-Decyloxy, iso-Decyloxy, n-Undecyloxy oder n-Dodecyloxy;
- Halogenatome wie vor allem Chlor, daneben aber auch Fluor, Brom oder Jod;
- Cyanogruppen;
- Hydroxylgruppen;
- Carbonestergruppen der Formel COOR³, beispielsweise Methoxycarbonyl, Ethoxycarbonyl, Propoxycarbonyl oder Butoxycarbonyl;
- Acylgruppen der Formel COR³, beispielsweise Acetyl oder Benzoyl;
- Carbonamidgruppen der Formel CONHR³, beispielsweise N-Methylaminocarbonyl, N-Ethylaminocarbonyl oder N-Phenylaminocarbonyl;
- Carbonyloxygruppen der Formel OCOR³, beispielsweise Methoxycarbonyloxy oder Ethoxycarbonyloxy;
- Carbonylaminogruppen der Formel NHCOR³, beispielsweise N-Acetylamino, N-Propionylamino oder N-Benzoylamino.

Die Reste R³ bedeuten hierbei geradkettige oder verzweigte C₁- bis C₁₂-Alkylgruppen, wofür die gleichen Beispiele wie oben angeführt werden können, C₅- bis C₈-Cycloalkyl wie vor allem Cyclopentyl und Cyclohexyl, daneben aber auch Cycloheptyl, Cyclooctyl, Methylcyclopentyl, Dimethylcyclopentyl, Methylcyclohexyl oder Dimethylcyclohexyl, sowie Phenyl.

Die Anzahl der Substituenten an den Aryl- oder Heteroarylresten R¹ bzw. R² kann bis zu 3, vorzugsweise bis zu 2 betragen. Bei mehreren Substituenten können diese gleich oder verschieden sein.

In einer bevorzugten Ausführungsform bedeuten die Reste R¹ und R² unabhängig voneinander vor allem Phenyl, welches durch ein oder zwei C₁-bis C₁₂-Alkylgruppen, insbesondere C₁- bis C₄-Alkylgruppen, C₁- bis C₁₂-Alkoxygruppen, insbesondere C₁- bis C₅-Alkoxygruppen, Chloratome, Cyanogruppen, Hydroxylgruppen oder Gruppen der Formel COOR³, wobei R³ die obengenannten Bedeutungen hat, insbesondere aber für C₁- bis C₄-Alkyl, Cyclopentyl, Cyclohexyl oder Phenyl steht, substituiert sein kann, daneben aber auch Pyridinyl.

Als Brückenglieder X eignen sich:
- geradkettige oder verzweigte C₂- bis C₃₀-Alkylengruppen wie 1,2-Ethylen, 1,2-Propylen, 1,3-Propylen, 1,4-Butylen, 1,2-Butylen, 2,3-Butylen, Pentamethylen, Hexamethylen, Heptamethylen, Octamethylen, Nonamethylen, Decamethylen, Undecamethylen oder Dodecamethylen;
- durch ein oder bis zu 9, insbesondere ein oder bis zu 5 nicht benachbarte Sauerstoffatome unterbrochene, vorzugsweise geradkettige oder nur in geringem Maße verzweigte C₂- bis C₃₀-Alkylengruppen, insbesondere C₂- bis C₁₈-Alkylengruppen;
- C₄- bis C₁₂-Alkenylengruppen wie 1,4-But-2-enylen, 1,6-Hex-3-enylen oder 1,8-Oct-4-enylen;
- C₄- bis C₁₂-Alkinylengruppen wie 1,4-But-2-inylen, 1,6-Hex-3-inylen oder 1,8-Oct-4-inylen;
- C₅- bis C₈-Cycloalkylengruppen wie 1,3-Cyclopentylen, 1,3-Cyclohexylen, 1,4-Cyclohexylen, 1,4-Cycloheptylen, 1,5-Cyclooctylen oder Gruppierungen der Formeln 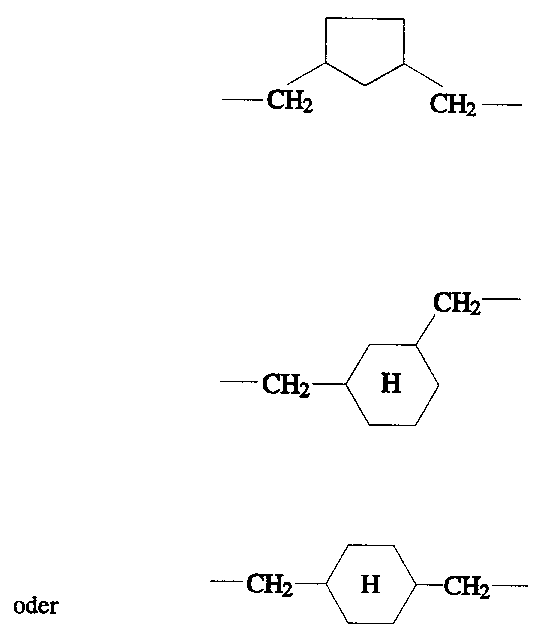
- o-, m- oder vor allem p-Phenylen.

In einer bevorzugten Ausführungsform bezeichnen die Brückenglieder X
- eine C₂- bis C₁₂-Alkylengruppe, insbesondere eine C₂- bis C₆-Alkylengruppe, die vorzugsweise eine Polymethylengruppe ist;
- eine Polyethylenglykol- oder Polypropylenglykol-Gruppe der Formel 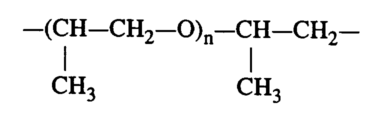 wobei n für 1 bis 9, insbesondere 1 bis 5, steht (die Werte für n stellen in der Regel Durchschnittswerte dar);
- eine cis-1,4-But-2-enylengruppe;
- eine 1,4-But-2-inylengruppe;
- eine C₆- bis C₈-Cycloalkylengruppe, insbesondere eine 1,4-Cyclohexylengruppe oder eine Gruppierung der Formel 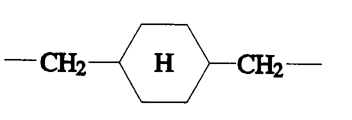
- eine p-Phenylengruppe.

Besonders bevorzugt werden für die Bestandteile (R¹, R², X) (Phenyl; Phenyl; (CH₂)₃) oder (Phenyl; Phenyl; 1,4-Dimethylencyclohexan) oder (4-Methylphenyl; 4-Methylphenyl; 1,4-Cyclohexan) verwendet.

Die Komponente C wird vorzugsweise in einer Menge von 0,01-10 Gew.-%, insbesondere 0,01-5 Gew.-%, bevorzugt 0,02-1 Gew.-% bezogen auf die Summe der Komponenten A bis D als 100 Gew.-% eingesetzt. Gegebenenfalls kann die Komponente C auch als Comonomer bei der Polymerisation der Komponente B eingesetzt werden.

Als Komponente D können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 95, insbesondere nicht mehr als 50 und ganz besonders nicht mehr als 30 Gew.-%, bezogen auf das Gesamtgewicht der Komponenten A bis D. Als Zusatzstoffe seien Schlagzähmodifier genannt, die in Mengen bis zu 20 Gew.-%, bevorzugt bis zu 15 Gew.-% enthalten sein können und welche verschieden von Komponente B sind.

Geeignet als Komponente D sind übliche Kautschuke, z.B. Acrylatkautschuk und Polymerisate konjugierter Diene, wie Polybutadienkautschuk und Polyisoprenkautschuk. Die Dienpolymerisate können, in an sich bekannter Weise, teilweise oder vollständig hydriert sein. Außerdem kommen z.B. m Betracht: Acrylnitrilbutadienkautschuk, hydrierter Styrolbutadienkautschuk, Ethylen-Propylen-Dien-Kautschuk, Polybutylen- und Polyoctenamerkautschuke, Ionomere, Blockcopolymere aus vinylaromatischen Monomeren mit Dienen wie Butadien oder Isopren (an sich bekannt aus EP-A 62282) mit dem Aufbau M1M2-, M1M2M1M2-, M1M2M1- oder M1M2M1'-, wobei diese Blockpolymerisate auch Segmente mit statistischer Verteilung enthalten können sowie Stern-Block-Copolymere sein können. M1 bzw. M1' sollen dabei einen Block aus vinylaromatischen Monomeren M2 einen "elastischen" Block auf Dienbasis bedeuten. Als besonders geeignet haben sich Polymerisate konjugierte Diene wie Polybutadienkautschuk oder Poly-isoprenkautschuk erwiesen. Derartige synthetische Kautschuke sind dem Fachmann geläufig und zusammenfassend in Ullmanns Encyklopädie der Technischen Chemie, 4. Auflage, Bd. 13, Seiten 595 bis 634, Verlag Chemie GmbH, Weinheim 1977, beschrieben.

Zusätzlich können weiterhin flammhemmende Zusätze wie Triarylphosphinoxide oder Triarylphosphate in den erfindungsgemäßen Formmassen enthalten sein.

Als Zusatzstoffe seien darüber hinaus genannt Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide. Auch niedermolekulare oder hochmolekulare Polymere kommen als Zusatzstoffe in Betracht, wobei Polyethylenwachs als Gleitmittel besonders bevorzugt ist.

Als Pigmente kommen z. B. in Frage TiO₂ und Ruße. Bei Verwendung von TiO₂ liegt die mittlere Teilchengröße im Bereich von 50-400 nm, insbesondere 150-240 nm. Technische Verwendung finden Rutile und Anatas, die gegebenenfalls mit Metalioxiden. z.B. Al-oxid, Si-Oxiden, Oxiden des Zn oder Siloxanen beschichtet sind.

Als Ruße sollen mikrokristalline, feinteilige Kohlenstoffe verstanden werden (vgl. Kunststofflexikon, 7. Auflage 1980). Als geeignet seien die Ofenruße, Acetylenruße, Gasruße sowie die durch thermische Herstellung erhältlichen Thermalruße genannt. Die Teilchengrößen liegen vorzugsweise im Bereich von 0,01 bis 0,1 µm und die Oberflächen im Bereich von 102 bis 104 in m²/g (BET/ASTM D 3037) bei DBP-Absorptionen von 102 bis 103 ml/100 g (ASTM D 2414).

Über Art und Menge dieser Zusatzstoffe lassen sich die gewünschten Eigenschaften der Endprodukte in weitem Maße steuern.

Die Herstellung der erfindungsgemäßen thermoplastischen Formmassen erfolgt zweckmäßigerweise durch Mischen der Komponenten bei Temperaturen im Bereich von 250 bis 320°C in üblichen Mischvorrichtungen, wie z.B. Knetern, Banburymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls drei Komponenten vorgemischt sein oder es können auch alle Komponenten gemeinsam gemischt werden.

Aus den erfindungsgemäßen thermoplastischen Formmassen lassen sich z.B. durch Spritzguß oder Extrusion Formkörper mit guter Wärmeformbeständigkeit herstellen, die insbesondere eine gute Haftung zu Polyurethanschäumen und eine bessere multiaxiale Zähigkeit aufweisen.

Die erfindungsgemäßen Formmassen eignen sich gut zur Herstellung von Formteilen aller Art, z.B. durch Spritzguß oder Extrusion. Sie können weiterhin bevorzugt zur Herstellung von Spritzgußteilen, Fasern, Folien oder Halbzeug im Tiefzieh- oder Blasverfahren verwendet werden.

### Beispiele

Es wurden folgende Komponenten eingesetzt:

### Komponente A

- A(1):: Poly-2,6-dimethyl-1,4-phenylenether mit einem mittleren Molekulargewicht (M_{w}) von 16000.
- A(2):: Poly-2,6-dimethyl-1,4-phenylenether mit einem mittleren Molekulargewicht (M_{w}) von 40000.

### Komponente B

- B(1):: Schlagfestes Polystyrol mit 9 Gew.-% Polybutadien und Zellteilchenmorphologie, mittlere Teilchengröße der Weichkomponente von 1,9 µm. Die Viskositätszahl (VZ) der Hartmatrix betrug 80 ml/g (0,5 gew.-%ig in Toluol bei 23°C; bestimmt in Anlehnung an DIN 53426).
- B(2):: Schlagfestes Polystyrol mit 17 Gew. -% Polybutadien und Zellteilchenmorphologie, mittlere Teilchengröße der Weichkomponente von 3,5 µm. Die VZ der Hartmatrix betrug 80 ml/g (0,5 gew.-%ig in Toluol bei 23°C).

### Komponente C

- C(1):: hergestellt gemäß Beispiel 1 der DE 41 22 475 aus 1,3 Propan dioldicyanoacetat, Anilin und Triethylorthoformiat
- C(2):: hergestellt gemäß Beispiel 48 der DE 41 22 475 aus 1,4 Dimethoxycyclohexandicyanoacetat, Anilin und Triethylorthoformiat
- C(3):: hergestellt gemäß Beispiel 33 der DE 41 22 475 aus 1,4 Cyclohexandioldicyanoacetat, 4-Methylanilin und Triethylorthoformiat

### Komponente D)

- D(1):: Hydrierter SBS Blockkautschuk Kraton® G 1650 (Shell AG) mit einem Styrolgehalt von 30 Gew.-%
- D(2):: Titandioxid Kronos® CL 220 (Rutil-Typ) mit einem mittleren Teilchendurchmesser von 0,28 µm (Bayer AG)

### Herstellung der Formmassen

Die Komponenten A bis D wurden auf einem Zweischneckenextruder bei 280°C konfektioniert, durch ein Wasserbad geleitet und granuliert. Das getrocknete Granulat wurde auf einer Spritzgußmaschine bei 280°C zu Normprüfkörpern verarbeitet. Die Vicattemperatur VST/B wurde nach DIN 53 460 bestimmt. Die Kerbschlagzähigkeit (Charpy) wurde nach DIN 53453 bei 23 °C ermittelt.

Die Haftung an Polyurethanschäumen wurde in folgendem Test ermittelt: Gepreßte Rundscheiben von 6 cm Durchmesser wurden auf eine Unterlage gebracht und mit einer kommerziell erhältlichen aufschäumenden Polyurethan-Mischung (Sprühdose) übergossen. Nach 24 h wurden die Preßplättchen manuell von Schaum abgezogen. Die Einstufung "gute Schaumhaftung" erfolgt, wenn dabei der Schaum reißt und die Einstufung "schlechte Schaumhaftung" bei einer Trennung an der Grenzfläche zwischen dem Polyurethanschaum und der Mischung aus Polyphenylenether und Styrolpolymerisat.

Die Zusammensetzung der Formmassen und die Ergebnisse der Messungen sind der Tabelle zu entnehmen.

| **Beispiel** | **A [Gew.-%]** | **B [Gew.-%]** | **C [Gew.-%]** | **D [Gew.-%]** | **Vicat [°C]** | **Kerbschlagzähigkeit [kJ/mm2]** | **Sehaumhaftung** |
|---|---|---|---|---|---|---|---|
| 1 | A(2) 60 | B(1) 34 | C(1) 1 | D(2) 5 | 160 | 10 | gut |
| 2 | A(1) 60 | B(2) 34 | C(1) 1 | D(2) 5 | 158 | 5 | gut |
| 3* | A(2) 60,5 | B(1) 34,5 | - | D(2) 5 | 161 | 11 | schlecht |
| 4 | A(2) 45 | B(1) 45 | C(2) 0,5 | D(1) 7,4 | 139 | 12 | gut |
| | | | | D(2) 2,1 | | | |
| 5* | A(2) 45,2 | B(1) 45,2 | - | D(1) 7,5 | 140 | 12 | schlecht |
| | | | | D(2) 2,1 | | | |
| 6 | A(2) 35 | B(2) 59 | C(3) 2 | D(1) 2 | 130 | 15 | gut |
| | | | | D(2) 2 | | | |
| 7* | A(2) 36 | B(2) 60 | - | D(1) 2 | 130 | 16 | schlecht |
| | | | | D(2) 2 | | | |

| | | | | | | | |
|---|---|---|---|---|---|---|---|
| * Vergleichsbeispiel | | | | | | | |

## Patentansprüche

1. Thermoplastische Formmassen, enthaltend
A) 5-99,99 Gew.-% eines Polyphenylenethers,
B) 0 bis 94,99 Gew.- % vinylaromatische Polymere, insbesondere schlagzäh modifizierte Styrolpolymerisate,
C) 0,01-10 Gew. -% Aminomethylencyanessigester, und
D) 0-95 Gew.-% Zusatzstoffe,
wobei sich die Gew.-%-Angaben auf die Summe der Bestandteile A, B, C und D als 100 Gew.-% beziehen.

2. Thermoplastische Formmasse nach Anspruch 1, dadurch gekennzeichnet, daß es sich bei dem Aminomethylencyanessigester um einen der allgemeinen Formel 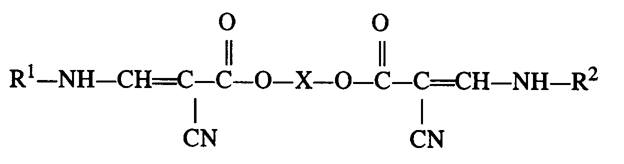 handelt, bei der
R¹ und R² unabhängig voneinander Phenyl, Naphthyl, Biphenyl oder fünf- oder sechsgliedriges Heteroaryl mit einem, zwei oder drei Stickstoffatomen oder einem Sauerstoffatom oder einem Schwefelatom oder einem Stickstoff- und einem Sauerstoffatom oder einem Stickstoff- und einem Schwefelatom, das benzanelliert sein kann, bedeuten, wobei diese Reste durch ein bis drei C₁- bis C₁₂-Alkylgruppen, C₁- bis c₁₂-Alkoxygruppen, Halogenatome, Cyanogruppen, Hydroxylgruppen, oder Gruppen der Formeln COOR³, COR³, CONHR³, OCOR³ oder NHCOR³ substituiert sein können und
wobei R³ für C₁- bis C₁₂-Alkyl, C₅- bis C₈-Cycloalkyl oder Phenyl steht,
und X eine C₂- bis C₃₀-Alkylengruppe, welche durch nicht benachbarte Sauerstoffatome unterbrochen sein kann, eine C₄- bis C₁₂-Alkenylen- oder C₄- bis C₁₂-Alkinylengruppe, wobei die ungesättigten Bindungen nicht zu den Ester-Sauerstoffatomen benachbart sind, eine C₅- bis C₈-Cycloalkylengruppe oder eine Phenylengruppe bezeichnet.

3. Thermoplastische Formmasse nach Anspruch 2, dadurch gekennzeichnet, daß ein Aminomethylencyanessigester eingesetzt wird, bei dem für (R¹; R²; X) (Phenyl; Phenyl; (CH₂)₃) oder (Phenyl; Phenyl; 1,4-Dimethylencyclohexan) oder (4-Methylphenyl; 4-Methylphenyl; 1,4-Cyclohexan) steht.

4. Thermoplastische Formmassen nach einem der Ansprüche 1 bis 3 enthaltend
A) 15-85 Gew.- % Polyphenylenether,
B) 15-85 Gew.- % vinylaromatische Polymere, insbesondere schlagzäh modifizierte Styrolpolymerisate, und
C) 0,01-5 Gew.- % Aminomethylencyanessigester.

5. Thermoplastische Formmassen nach einem der Ansprüche 1 bis 4 enthaltend
A) 30-70 Gew.-% Polyphenylenether,
B) 30-70 Gew. -% vinylaromatische Polymere, insbesondere schlagzäh modifizierte Styrolpolymerisate, und
C) 0,02-1 Gew.-% Aminomethylencyanessigester.

6. Thermoplastische Formmassen nach einem der Ansprüche 1 bis 5, dadurch gekennzeichnet, daß als Komponente B Styrol-Butadien-Pfropfpolymere (HIPS) verwendet werden.

7. Thermoplastische Formmassen nach einem der Ansprüche 1 bis 6, bei denen der Polyphenylenether A ein mittleres Molekulargewicht (Gewichtsmittel) von 8.000 bis 70.000, bevorzugt 12.000 bis 50.000 und insbesondere 25.000 bis 45.000, aufweist.

8. Formkörper bestehend aus einer thermoplastischen Formmasse nach einem der Ansprüche 1 bis 7.

9. Formkörper nach Anspruch 8, dadurch gekennzeichnet, daß an dem Formkörper Polyurethanschaummaterial fest haftend angeordnet ist.

10. Verwendung von Aminomethylencyanessigester als Zusatzmittel in Polyphenylenether (PPE)-Massen.

11. Verwendung nach Anspruch 10, dadurch gekennzeichnet, daß als PPE-Masse eine solche verwendet wird, wie sie in einem der Ansprüche 1 bis 8 definiert ist.
